# EUROPÄISCHE PATENTSCHRIFT

(11) **EP 2 577 058 B1**
(45) Veröffentlichungstag und Bekanntmachung des Hinweises auf die Patenterteilung: **10.08.2016**
(21) Anmeldenummer: 11723075.5
(22) Anmeldetag: 03.06.2011
(51) Int. Cl.: F03D 80/00, F03D 13/00, H02G 3/30

(54) **TURM FÜR EINE WINDTURBINE**
TOWER FOR A WIND TURBINE
MÂT POUR ÉOLIENNE

(30) Priorität: 03.06.2010 DE 102010022581
(43) Veröffentlichungstag der Anmeldung: 10.04.2013
(73) Patentinhaber: Suzlon Energy GmbH, 18057 Rostock (DE)
(72) Erfinder: DOMESLE, Melanie, 18057 Rostock (DE); STARKE, Sven, 18055 Rostock (DE); FROHBERG, Falk, 04315 Leipzig (DE)
(86) Internationale Anmeldenummer: PCT/EP2011/059230
(87) Internationale Veröffentlichungsnummer: WO 2011/151465

(56) Entgegenhaltungen:
- WO-A1-2007/094736
- JP-A- 2004 084 518
- JP-A- 2006 246 549
- JP-A- 2008 298 051
- US-A1- 2004 094 965
- US-A1- 2009 206 610

## Beschreibung

Die Erfindung betrifft einen Turm für eine Windturbine und eine Kabelführung für einen Turm einer Windturbine, wobei auf dem Turm ein Maschinenhaus der Windturbine um eine vertikale in Längsrichtung des Turms verlaufende Achse mittels des Azimutlagers drehbar angeordnet ist. In dem Maschinenhaus ist ein Generator zur Erzeugung von elektrischer Energie vorgesehen, welcher durch einen Rotor der Windturbine antreibbar ist. Das Azimutlager ermöglicht die horizontale Ausrichtung des Maschinenhauses gemäß der Windrichtung, die sogenannte Windnachführung der Windturbine. Zur selbsttätigen Ausrichtung des Maschinenhauses sind an dem Azimutlager ein oder mehrere Azimutantriebe vorgesehen, die drehfest mit dem Maschinenträger der Gondel verbunden sind. Dabei müssen die Azimutlager die auftretenden Lagerkräfte, wie Schub-, Kreisel- und Gierkräfte, aus dem Maschinenträger des Maschinenhauses in den Turm einleiten.

Bei der Windnachführung - auch als "Gieren" bezeichnet - wird das Maschinenhaus um eine vertikale Drehachse in der horizontalen Ebene gedreht, um den Rotor senkrecht in den Wind zu drehen und folglich die Energieausbeute zu maximieren. Da die Windrichtung variiert oder sogar rotiert, kann es möglich sein, dass das Maschinenhaus sich mehrmals um die eigene Achse dreht.

Die im Folgenden verwendeten Angaben einer Axialrichtung, Radialrichtung, Umfangsrichtung und Angaben zu Oben und Unten gelten bezüglich der Turmachse des aufgestellten Turms der Windturbine.

In dem Turm der Windturbine werden stromführende Kabel, wie Leistungskabel, von elektrischen Komponenten aus dem Maschinenhaus zum Boden geführt. Es handelt sich dabei um eine Vielzahl von Kabel, beispielsweise mehrere Kabel zur elektrischen Leitung einzelner Phasen von Wechselstrom, insbesondere dreiphasiger Wechselstrom, Kabel für Erdungsleiter und/oder Signal- und Steuerkabel. Die genaue Anzahl der Kabel, insbesondere der Leistungskabel, ist von dem Querschnitt der einzelnen elektrischen Leitern und dem zu übertragenden Nennstrom abhängig. Normalerweise ist die Strombelastbarkeit eines einzelnen Leiters der Leistungskabel zu gering, um den Nennstrom zu übertragen, weshalb der Nennstrom auf mehrere Leistungskabel aufgeteilt wird.

Die Kabel sind in einem unteren Teil des Turms fest angeordnet, vorzugsweise mittels Kabelklemmen an der Turmwand. In einem mittleren Teil des Turms werden die Kabel von der Turmwand über eine Kabelstütze in einen radial mittigen Bereich des Turminneren geführt. Von dort aus verlaufen die Kabel dann mittig und frei hängend zu einem oberen Ende des Turms bis in das Maschinenhaus. Um Aufschwingungen der Kabel zu verhindern werden bei bekannten Windturbinen die Kabel durch ein Rohr, vorzugsweise ein PE-Rohr, und durch eine runde Öffnung in der obersten Plattform des Turms geführt. Durch die Führung der Kabel durch das Rohr werden die Kabel in einem großen Bündel gesammelt. Durch die Bündelung kann es durch gegenseitige Induktion der dicht liegenden stromführenden Kabel zu einer reduzierten Strombelastbarkeit der Kabel kommen. Wenn sich nun das Maschinenhaus auf Grund der Windnachführung mehrmals um die eigene Achse dreht, so verwinden sich die Kabel. Dabei kann es zur Beschädigung oder zum Verschleiß der Isolierungen durch Reibung zwischen die einzelnen Kabel kommen, wodurch ein hohes Sicherheitsrisiko erzeugt wird. Zudem nähern sich die einzelnen Kabel zueinander an, wodurch wiederum die Strombelastbarkeit der Kabel reduziert wird. Dies hat zur Folge dass die benötigte Anzahl der Kabel zum Übertragen des Nennstroms zunimmt, wodurch die damit verbundenen Kosten steigen.

Beispiele aus dem Stand der Technick sind aus JP 2008 298 051, US 2004 094 965, JP 2006 246 549 und WO 2007 094 736 bekannt.

Es ist eine Aufgabe der Erfindung eine verbesserte Führung der Kabel anzugeben, welche unter anderem die Nachteile des Stands der Technik vermeidet. Insbesondere soll dabei erreicht werden, dass die Strombelastbarkeit der Kabel sichergestellt wird, und/oder der Verschleiß zwischen den Kabeln reduziert wird.

Die Aufgabe wird erfindungsgemäß mit den Merkmalen des Hauptanspruchs 1 gelöst.

Gemäß einer bevorzugten Ausführungsform ist die Bündelungsvorrichtung derart ausgebildet, alle benachbarten Leistungskabel mit dem Mindestabstand beabstandet sind. Dies können im Falle einer Windturbine mit einem doppelt gespeisten Asynchrongenerator, wobei die Umrichtereinheit im Fuß des Turms angeordnet ist, mehrere vom Stator herführende Leistungskabel sein, bevorzugt auch die vom Generatorrotor herführenden Leistungskabel und/oder Erdungskabel sein.

In dem Fall, dass mehrphasiger, insbesondere dreiphasiger Strom durch die Kabel, insbesondere durch die Leistungskabel geleitet wird, so umfasst jedes Leistungskabel drei einzelne Leiter. Diese Leiter können zusammengefasst werden, da sich die Magnetfelder der jeweiligen Phasen des Stroms im Wesentlichen gegenseitig aufheben. Im Rahmen dieser Erfindung gilt dieses mehrphasige Kabel mit zusammengefassten Leitern als ein Kabel, bzw. als ein stromführendes, insbesondere Leistungskabel. Die einzelnen Leiter müssen dabei nicht zwingend mit einer gemeinsamen Hülle umgeben sein. Dies trifft zum Beispiel bei zusammenlegen der drei Phasen eines dreiphasigen Stroms in einer Kleeblattstruktur zu.

Gemäß einer weiteren Ausführungsform ist die Bündelungsvorrichtung derart ausgebildet, dass alle benachbarten Kabel, wie Leistungskabel, Erdungskabel und Steuer- und Signalkabel mit dem Mindestabstand beabstandet sind.

In einer weiteren Ausführungsform umfasst die Bündelungsvorrichtung Befestigungsvorrichtungen zur Anordnung der Kabel. Diese können derart an der Bündelungsvorrichtung angeordnet sein, so dass die Kabel in einer mehreckigen und gleichseitigen Struktur angeordnet sind. Die Struktur kann dabei zum Beispiel die Form eines gleichseitigen Dreiecks, eines Quadrats, eines regelmäßigen Fünfecks oder eine mehreckige und gleichseitige Form mit beliebig viele Ecken aufweisen. Die Anzahl der Ecken und Seiten muss jedoch mindestens dieselbe wie die Anzahl der mittels Mindestabstand zu trennenden Kabel, der Leistungskabel oder der stromführenden Kabel sein. Die Befestigungsvorrichtungen werden so angeordnet, dass der Abstand zwischen den nächstliegenden, in den Aufnahmen befestigten Kabeln, einen Mindestabstand zum Verhindern einer Reduzierung der Strombelastbarkeit der verschiedenen Kabel durch gegenseitige Induktion laut IEC 60364-5-52 aufweist. Durch Einhalten des Mindestabstands der Kabel zueinander wird die Strombelastbarkeit der Kabel optimiert, so dass die Anzahl der benötigten Kabel zum Übertragen des Nennstroms reduziert werden kann. Dies ist besonders wichtig bei der Kabelführung von Windturbinen, da sehr hohe Leistungen durch den Turm geleitet werden.

Die mehrwinklige und gleichseitige Ausprägung der Bündelungsvorrichtung hat den Vorteil, dass der Abstand der einzelnen Kabel zueinander maximal bei einer minimalen Gesamtgröße der Bündelungsvorrichtung ist, und folglich die elektromagnetische Beeinflussung der Kabel untereinander minimiert wird. Ein möglichst kleiner Durchmesser der Bündelungsvorrichtung ist hinsichtlich der Verkürzung des Kabelbündels durch Verwindung am günstigsten. Der Abstand zwischen den Aufnahmen der Klemmspangen sollte daher möglichst kurz gehalten werden, so dass der Überschuss an Kabel zum Kompensieren der Verkürzung des Bündels möglichst gering gehalten werden kann.

In einer bevorzugten Ausführungsform sind die Befestigungsvorrichtungen derart angeordnet, sodass die Struktur der Aufnahmen eine zusätzliche Ecke und Seite aufweist. Die dadurch zusätzlich vorhandene Aufnahme dient zum aufnehmen des Kabels des Neutralleiters, so dass auch zwischen des Kabels des Neutralleiters und den nächstliegenden stromführenden Kabeln einen Mindestabstand laut IEC 60364-5-52 vorhanden ist.

In einer besonders bevorzugten Ausführungsform sind die Befestigungsvorrichtungen derart angeordnet, sodass die Struktur der Aufnahmen genau so viele Ecken und Seiten wie die Anzahl der vorhandenen Kabel aufweist. Die dadurch zusätzlich vorhandene Aufnahmen dienen zum aufnehmen der Signalleitungen, so dass auch zwischen Signalleitungen und den nächstliegenden Stromführenden Kabeln oder des Kabels des Neutralleiters einen Mindestabstand laut IEC 60364-5-52 vorhanden ist.

Erfindungsgemäß umfasst die Bündelungsvorrichtung einen Träger, an welchen die Befestigungsvorrichtungen zum Befestigen der Kabel an die Bündelungsvorrichtung angeordnet sind. Dabei weist die Befestigungsvorrichtung eine Aufnahme zum Aufnehmen der Kabel auf. Der Träger kann einteilig oder mehrteilig ausgebildet sein und kann z.B. eine ringförmige, kreuzförmige oder sternförmige Form aufweisen. Denkbar ist auch, dass der Träger zumindest teilweise durch die Befestigungsvorrichtungen gebildet ist bzw. die Befestigungsvorrichtungen zumindest teilweise durch den Träger gebildet sind. Dabei würden zum Bespiel mehrere Befestigungsvorrichtungen aneinander montiert werden, so dass diese kombinierte Struktur die Funktion des Trägers übernimmt. Die Bündelungsvorrichtung kann durch Anbauen von mehreren-Klemmspangen einfach an die vorhandene Kabelanzahl erweitert werden, was Kosten bei Montage und bei Lagerhaltung von Ersatzteilen für die Bündelungsvorrichtung spart.

Die Befestigungsvorrichtungen sind vorzugsweise als an den Träger, mittels Befestigungselemente, befestigbare Klemmspangen ausgebildet. Die Befestigungselemente können z.B. Schrauben sein. In einer ersten Ausführungsform sind die Klemmspangen drehfest mit dem Träger verbunden und einstückig ausgebildet, so dass die Klemmspangen zusammen mit dem Träger die Befestigungsvorrichtung bildet. Die Klemmspangen sind vorteilhafterweise bogenförmig ausgebildet, so dass eine Aufnahme für ein Kabel oder für ein Kabel mit mehreren Leitern entsteht. Das sich in der Aufnahme befindende Kabel wird beim Befestigen der Klemmspange an dem Träger zwischen Klemmspange und Träger eingeklemmt, sodass die Bündelungsvorrichtung fest mit dem Kabel verbunden ist.

In einer bevorzugten Ausführungsform ist die Klemmspange als ein V-förmiger Bogen ausgebildet, so dass die Aufnahme einen dreieckigen Querschnitt aufweist. Dies hat den Vorteil, dass bei einem dreiphasigen Kabel, umfassend drei Leiter, das stromführende Kabel von der Klemmspange in der Kleeblattstruktur fixiert wird. In dem Fall, dass Kabel mit geringeren Durchmessern, z.B. Signalkabel, vorhanden sind, können die Aufnahmen einen Einsatz umfassen der die Größe der Aufnahme reduziert.

Erfindungsgemäß sind die Befestigungsvorrichtungen jeweils drehbar um eine im Wesentlichen in Radialrichtung verlaufende Achse an dem Träger angeordnet. Durch die drehbare Anordnung der Befestigungsvorrichtungen können sich die Befestigungsvorrichtungen mit der Verwindung der Kabel verdrehen, so dass eine Normalachse zu dem dreieckigen Querschnitt der Aufnahme der Befestigungsvorrichtungen immer parallel zu einer Längsachse der Kabel verläuft. Somit können sowohl die Belastung der Kabel als auch die Belastung der Befestigungsvorrichtungen und deren Verbindungselemente reduziert werden. Die Befestigungsvorrichtung ist in dieser Ausführungsform mehrteilig ausgebildet.

Bei ringförmigen Trägern weist die Bündelungsvorrichtung einen radial inneren, kreisähnlichen ungenutzten Querschnitt auf. Dieser Querschnitt kann gemäß ein weiteres Ausführungsbeispiel zur Führung von weiteren Kabeln, wie zum Beispiel Daten-, Steuer, oder Signalkabel verwendet werden. Günstiger Weise wird dazu an dem Träger eine weitere, lockere Führung angebracht, beispielsweise in Form eines zu einer Spirale gebogenen Rundstahls, der in Radialbohrungen des Trägers befestigt ist.

Eine vorteilhafte Ausführung der Erfindung offenbart, dass der untere Bereich des Kabelbündels über eine Kabelschleife mit der turmfesten Kabelführung des Turms verbunden ist. Durch die Verwindung der Kabel verkürzt sich das Kabelbündel in axialer Richtung. Damit eine freie Drehung des Maschinenhauses nicht durch ein Verspannen der Kabel verhindert wird oder die Kabel so beschädigt werden würden, sind die Kabel in der Schleife geführt. Die Verkürzung des Kabelbündels wird durch den Überschuss von Kabel in der Schleife kompensiert.

Vorteilhafterweise umfasst der Turm eine Vielzahl von Bündelungsvorrichtungen die mit regelmäßigen Abständen zwischen dem oberen und den unteren Bereich des Kabelbündels an den Kabeln befestigt sind. Der Abstand zwischen den Bündelungsvorrichtungen wird dabei so gewählt, dass eine Verwindung der Kabel zwar zugelassen wird, die Kabel aber auch bei einer maximalen Verdrehung des Maschinenhauses noch den vorgeschriebenen Mindestabstand zu einander aufweisen.

Die Kabelbündel weisen vorteilhafter Weise einen axialen Abstand von 500 bis 1000 mm zu einander auf, besonders vorteilhaft sind die Abstände zwischen 500 bis 600 mm. Das Kabelbündel hängt zum größten Teil frei in dem Turm der Windturbine und ist nur am oberen Teil drehfest mit dem Maschinenhaus und am unteren Bereich drehfest mit einer Führungsvorrichtung verbunden. Das Kabelbündel ist selbsttragend und durch die Bündelungsvorrichtungen stabilisiert.

Durch Bewegungen des Turms und durch Resonanzen kann es zu einer Schwingung des Kabelbündels in radialer Richtung kommen. Um die radiale Bewegung Kabelbündels zu begrenzen, umfasst der Turm in einer weiteren Ausführungsform mindestens eine axial wirksame Ringführung, die fest mit dem Turm verbunden ist. Das Kabelbündel ist durch die Ringführung geführt und hängt danach zum größten Teil frei in dem Turm der Windturbine. Günstiger Weise können mehrere Ringführungen verwendet werden, bevorzugt zwei, besonders bevorzugt drei und ganz besonders bevorzugt vier Ringführungen.

Die Verwindung des Kabelbündels hat eine Verkürzung desselben zur Wirkung, wodurch sich die Bündelungsvorrichtungen, die unteren stärker als die oberen, in Richtung Maschinenhaus verschieben. Durch die axiale Verschiebung der Bündelungsvorrichtungen kann es sein, dass sich die Bündelungsvorrichtung in einer Ringführung axial verhakt. Wenn sich die Bündelungsvorrichtungen verhaken, wird eine weitere Verdrehung des Maschinenhauses verhindert, das Kabelbündel stark belastet u. U. bis zur Zerstörung. Um dies zu vermeiden, umfasst mindestens eine Bündelungsvorrichtung, die in axialer Nähe zu einer Ringführung angeordnet und somit gegen Verhakten gefährdet ist, eine radiale Abstützung. Diese ist geeignet während der gesamten axialen Bewegung des Kabelbündels selbiges gegenüber den Ringen in Radialrichtung abzustützen. Die radiale Abstützung muss daher eine axiale Länge aufweisen, die größer ist als die, an der aktuellen Position entstehende, axiale Verkürzung des Kabelbündels.

In einer weiteren Ausführungsform kann die radiale Abstützung mindestens zwei nacheinander folgenden Bündelungsvorrichtungen verbinden. Die axiale Länge der radialen Abstützung muss auch in dieser Ausführungsform größer sein als die, in dem aktuellen Bereich entstehende, axiale Verkürzung des Kabelbündels. Denn nur so kann sichergestellt werden, dass die Abstützung während der gesamten axialen Bewegung des Kabelbündels in Kontakt mit der Ringführung stehen kann.

Insbesondere können die Abstände zwischen den, durch die axiale Ringführung, verbundenen Bündelungsvorrichtung, größer als die in dem aktuellen Bereich entstehende axiale Verkürzung des Kabelbündels. Somit können die Bündelungsvorrichtungen in dieser Ausführungsform auch in unregelmäßigen Abständen an den Kabeln befestigt sein.

Da die radiale Abstützung mit zwei Bündelungsvorrichtungen verbunden ist, welche gemäß der Längsachse des Kabelbündels zueinander drehbar angeordnet sind, kann die radiale Abstützung bei einem Verwinden des Kabelbündels verbogen werden. Um dies zu verhindern, können die beide Bündelvorrichtung zusätzlich zu der verbindenden radialen Abstützung durch eine Versteifung verbunden werden. Durch diese Versteifung werden die beiden, mit der radialen Abstützung verbundenen, Bündelungsvorrichtungen drehfest mit einander verbunden, was eine Verwindung des Kabelstrangs in diesem Bereich und einer Verbiegung der radialen Abstützung verhindert.

Weitere Einzelheiten der Erfindung gehen aus den Zeichnungen anhand der Beschreibung hervor.

In den Zeichnungen zeigen
- Fig. 1: eine Windturbine,
- Fig. 2: einen oberen Teil des Turms der Windturbine,
- Fig. 3a: eine erste Ausführung einer Bündelungsvorrichtung, die nicht Teil der beanspruchten Erfindung ist
- Fig. 3b: einen Träger der Bündelungsvorrichtung,
- Fig. 3c: einen Querschnitt der Bündelungsvorrichtung,
- Fig. 4: eine Klemmspange der Bündelungsvorrichtung,
- Fig. 5: einen Einsatz der Klemmspange,
- Fig. 6a: eine axiale Draufsicht einer zweiten Ausführung der Bündelungsvorrichtung,
- Fig. 6b: eine radiale Draufsicht einer zweiten Ausführung der Bündelungsvorrichtung,
- Fig. 7: Bündelungsvorrichtung mit lockeren Führungen,
- Fig. 8a: Bündelungsvorrichtung mit radiale Abstützungen, und
- Fig. 8b: Ringführung zur radialen Führung des Kabelbündels

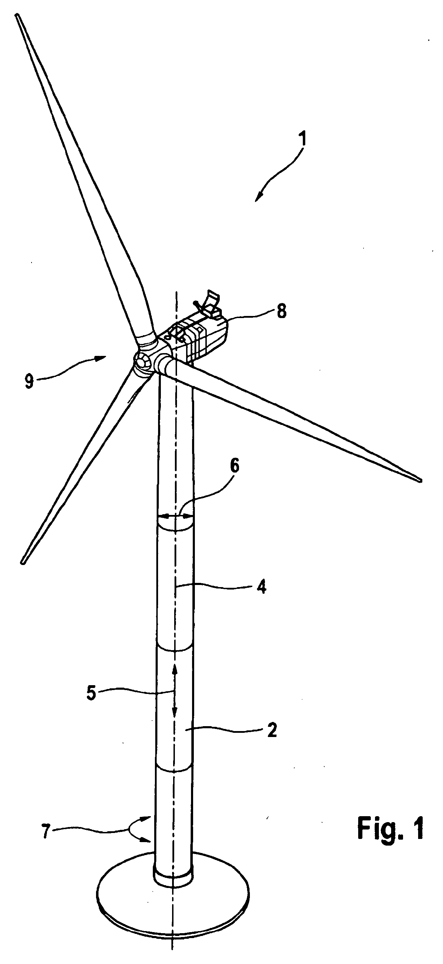

In Figur 1 ist eine Windturbine 1 mit einem Turm 2, mit einem auf den Turm 2 drehbar um eine Turmachse 4 des Turms 2 gelagerten Maschinenhaus 8 und ein über eine Rotorwelle mit einem in dem Maschinenhaus 8 angeordneten Generator verbundenen Rotor 9 dargestellt. Bei der Windnachführung - auch als "Gieren" bezeichnet - wird das Maschinenhaus 8 um die Turmachse 4 des Turms 2 in der horizontalen Ebene gedreht, um den Rotor 9 senkrecht in den Wind zu drehen und folglich die Energieausbeute zu maximieren. Da die Windrichtung während dem Betrieb der Windturbine 1 variiert oder sogar rotiert, kann es möglich sein, dass das Maschinenhaus 8 sich mehrmals um die eigene Achse dreht.

Die im Folgenden verwendeten Angaben einer Axialrichtung 5, Radialrichtung 6, Umfangsrichtung 7 und Angaben zu Oben und Unten gelten bezüglich der Längsachse des aufgestellten Turms 2 der Windturbine 1.

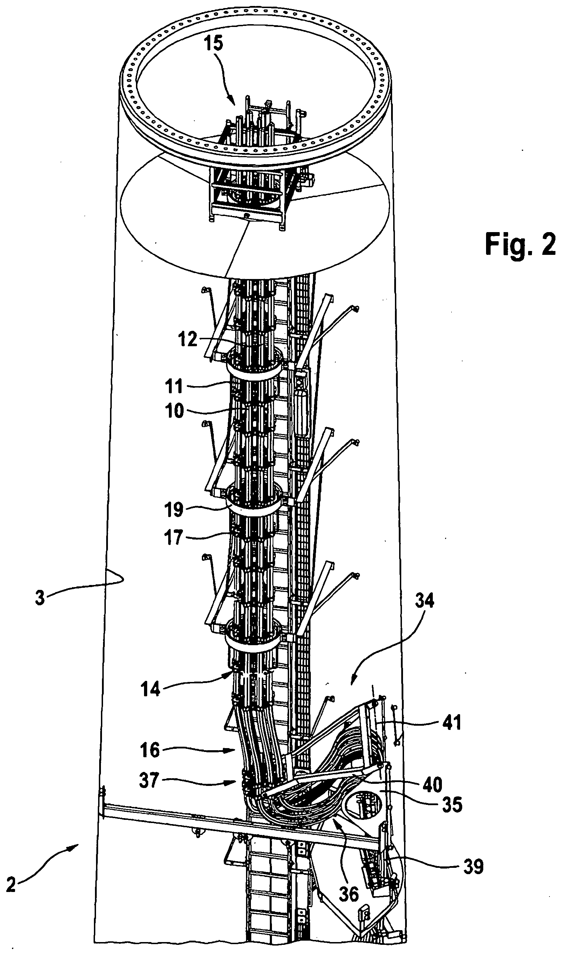

Fig. 2 führt einen oberen Teil des Turms 2 einer Windturbine 1 an. In dem Turm 2 der Windturbine 1 werden mehrere stromführende Kabel 10, 11, 12, 13 von elektrischen Komponenten aus dem Maschinenhaus 8 zum Boden geführt. Diese stromführenden Kabel 10, 11, 12, 13 sind zum Beispiel Kabel 10 zur elektrischen Leitung von dreiphasigen Wechselstrom (Leistungskabel 10), Kabel für Erdungsleiter 11 und/oder Signal- und Steuerkabel 12. Die stromführenden Kabel 10, 11, 12, 13 werden in dem oberen Teil des Turms 2 durch eine Vielzahl von Bündelungsvorrichtungen 17, 27 zu einem Kabelbündel 14 zusammengefasst. Dieses Kabelbündel 14 ist an dem oberen Ende 15 drehfest mit dem drehbar auf dem Turm 2 gelagerten Maschinenhaus 8 befestigt und an dem unteren Bereich 16 des Kabelbündels 14 drehfest mit dem Turm 2 verbunden, hängt aber im Wesentlichen frei in dem Turm 2. Um eine radiale Bewegung des Kabelbündels 14 abzustützen umfasst der Turm 2 auch eine Mehrzahl von Ringführungen 19 die fest mit dem Turm 2 verbunden sind und durch die das Kabelbündel 14 geführt wird.

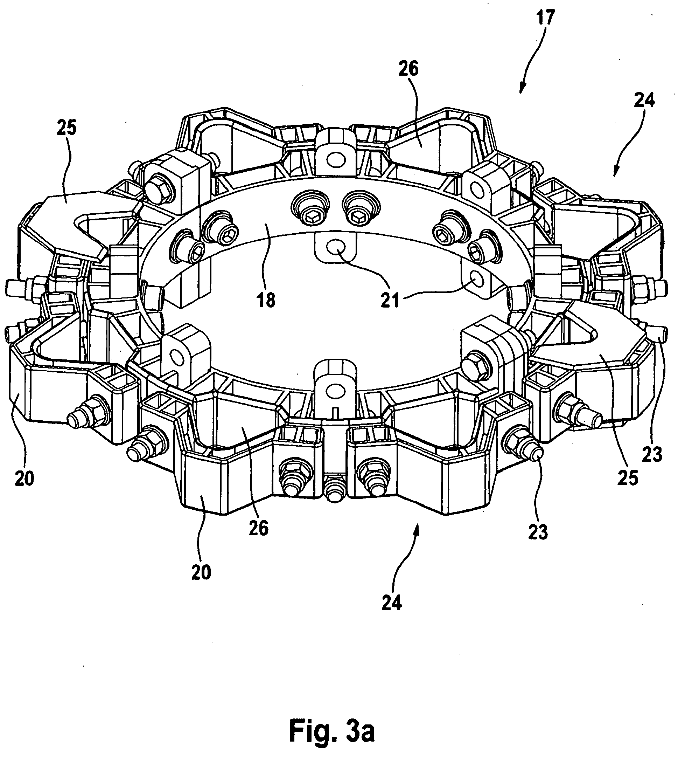

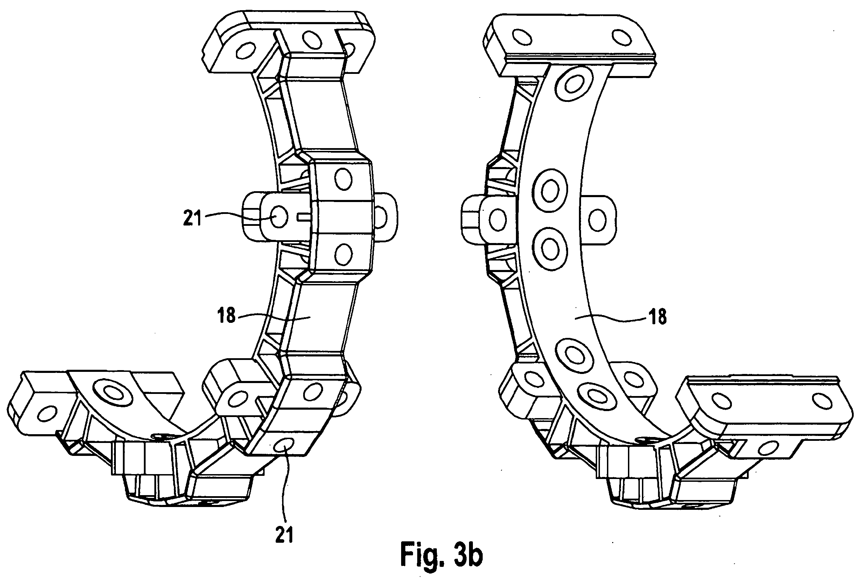

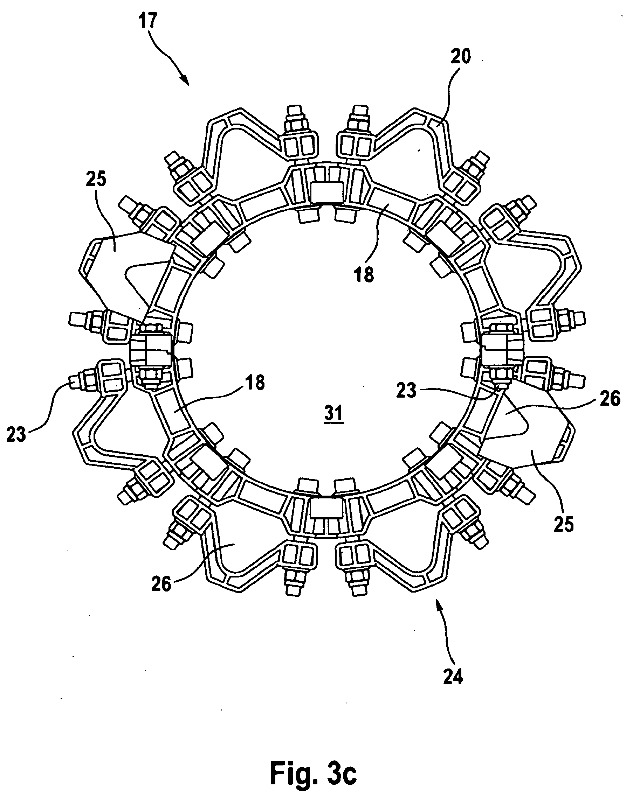

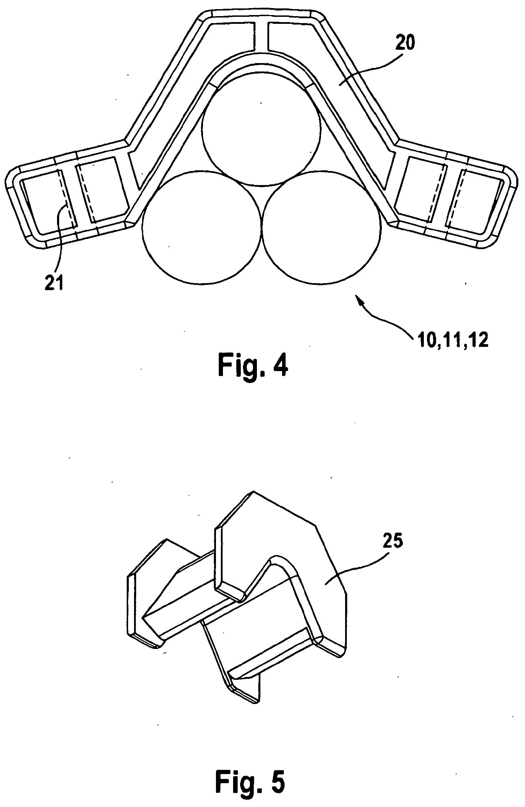

Fig. 3a und Fig. 3c zeigt eine Bündelungsvorrichtung 17, die nicht Teil der beanspruchten Erfindung ist umfassend einen zweiteiligen Träger 18 und mehrere Klemmspangen 20. Der ringförmige Träger 18 besteht aus zwei Teilen die miteinander verschraubt werden. Der Träger 18 weist in Radialrichtung 6 eine Vielzahl von Bohrungen 21 auf die zum Befestigen von den Klemmspangen 20 dienen. Weiterhin weist der Träger 18 auch Bohrungen 21 zum Befestigen von beispielsweise radialen Abstützungen 22 auf. Die einzelnen Teile des Trägers 18 sind auch in Fig. 3b dargestellt. Die Klemmspangen 20 sind im Wesentlichen V-förmig ausgebildet und umfassen zwei Flansche mit Bohrungen zum Befestigen der Klemmspangen 20 an dem Träger 18. Die Klemmspangen 20 werden mittels Schrauben 23 drehfest mit dem Träger 18 verbunden und bilden zusammen mit dem Träger 18 eine Befestigungsvorrichtung 24 für Kabel 10, 11, 12. Die Befestigungsvorrichtungen 24 sind dabei derart angeordnet, so dass sie eine gleichseitige und mehreckige Struktur bilden. Durch diese Struktur weisen die in den Befestigungsvorrichtungen 24 befestigten Kabel 10, 11, 12 zu jeder Zeit einen Abstand D zu einander auf. Durch die V-Form der Klemmspange 20 bildet sich eine Aufnahme 26 für Kabel 10, 11, 12 zwischen Träger 18 und Klemmspange 20. Durch den im Wesentlichen dreieckigen Querschnitt der Aufnahme 26, werden besonders dreiphasige Kabel 10, 12 - umfassend jeweils drei eine Phase führende Leiter 10a, 10b, 10c - in einer vorteilhaften Kleeblattstruktur gehalten. Die Klemmspange 20 und die Kleeblattstruktur der Kabel 10, 12 sind auch in Figur 4 dargestellt. Die Befestigungsvorrichtung 24 kann auch einen Einsatz 25 umfassen. Durch den Einsatz 25 verringert sich die Größe der Aufnahme 26 der Befestigungsvorrichtung 24, so dass auch Kabel 12 mit geringerem Querschnitt befestigt werden können. Solche Kabel 12 können dreiphasige Kabel eines Rotors eines doppelt gespeisten Asynchrongenerators sein. Figur 5 zeigt den Einsatz 25 in ausgebautem Zustand.

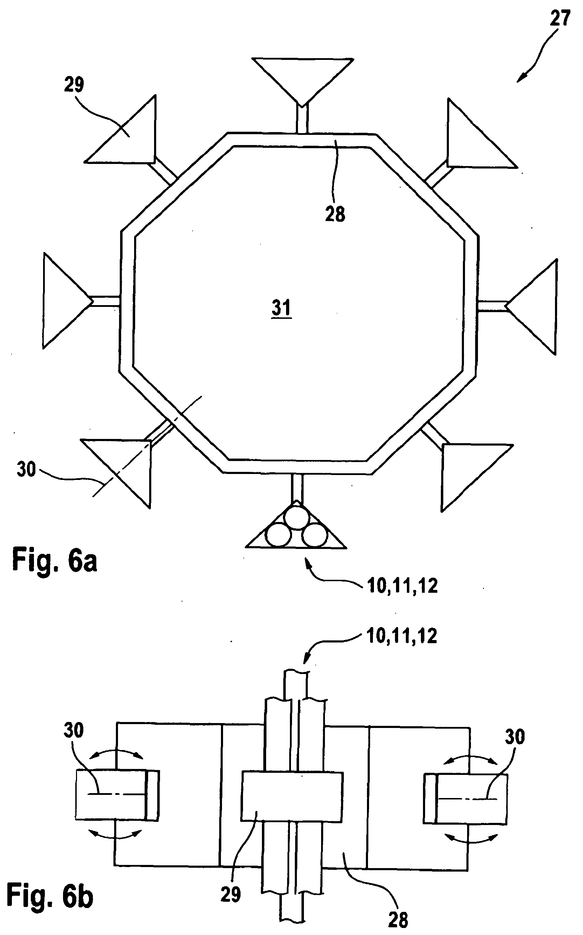

In Figur 6a und 6b wird eine weitere Ausführungsform der Bündelungsvorrichtung 27 dargestellt. Figur 6a zeigt die Bündelungsvorrichtung 27 anhand einer axialen Draufsicht und Figur 6b anhand einer radialen Draufsicht. In dieser Ausführungsform sind die Befestigungsvorrichtungen 29 jeweils drehbar um eine in Radialrichtung 6 des Trägers 28 verlaufende Achse 30 befestigt. Die Befestigungsvorrichtungen 29 bilden alleine die Aufnahme 26 für die Kabel 10, 11, 12. Durch die drehbare Befestigung können sich die Befestigungsvorrichtungen 29 mit einer Schrägstellung des Kabels 10, 11, 12 drehen, so dass die Längsachsen der Aufnahme 26 der Befestigungsvorrichtung 29 und den darin befestigten Kabeln 10, 11, 12 auch während einer Schrägstellung der Kabel 10, 11, 12 parallel bleiben. Dadurch werden die auf die Kabel 10, 11, 12 und auf die Befestigungsvorrichtungen 29 wirkenden Belastungen reduziert.

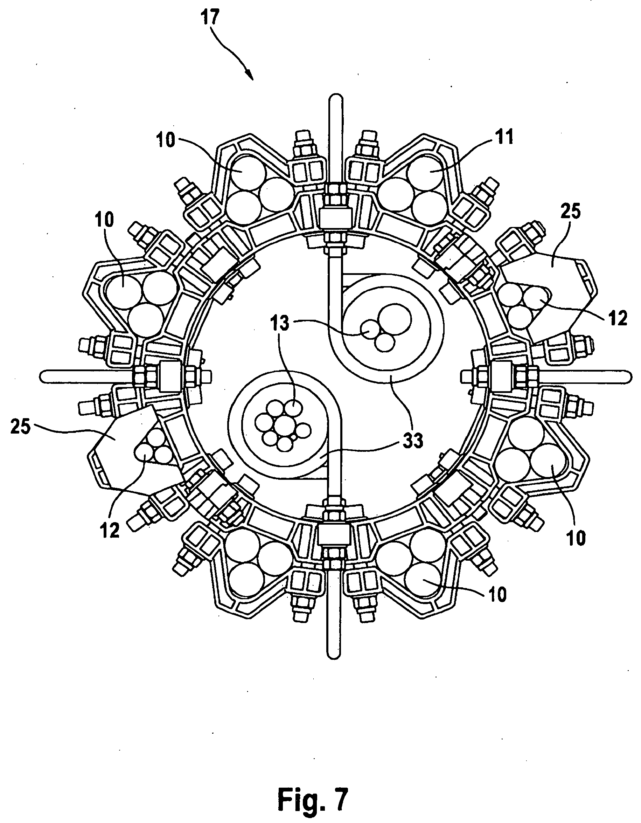

Die in Fig. 7 dargestellte Bündelungsvorrichtung 17 weist einen radial inneren, kreisähnlichen Querschnitt 31 auf. Dieser Querschnitt 31 kann gemäß eines weiteren Ausführungsbeispiels zur Führung von weiteren Kabeln 14, wie zum Beispiel Daten-, Steuer, oder Signalkabel verwendet werden. Hierzu wird an dem Träger 18 der Bündelungsvorrichtung 17 eine weitere, lockere Führung 33 angebracht, beispielsweise in Form eines zu einer Spirale gebogenen Rundstahls, der in Radialbohrungen 21 des Trägers 18 befestigt ist. In Figur 7 ist auch die Kleeblattformation der in den Befestigungsvorrichtungen 24 befestigten Kabeln 10, 11, 12 und der eingehaltene Abstand D der Kabel 10, 11, 12 zueinander zu sehen.

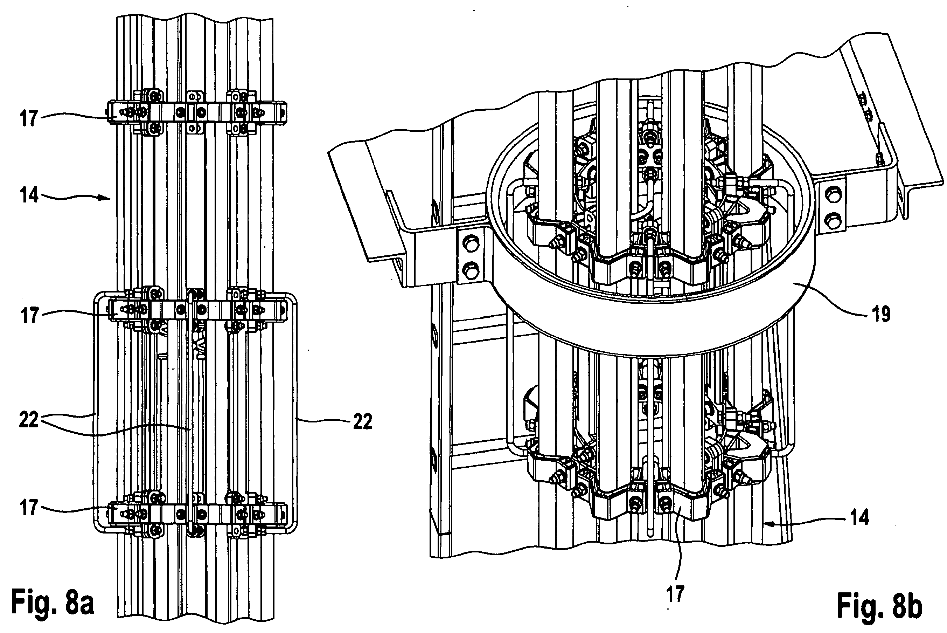

In Fig. 8a wird ein Kabelbündel 14 mit Bündelungsvorrichtungen 17 und radialen Abstützung 22 abgebildet. Die radialen Abstützungen 22 sind in diesem Ausführungsbeispiel als U-förmige Stangen ausgebildet, die jeweils mit zwei in Axialrichtung 5 nacheinander folgenden Bündelungsvorrichtungen 17 verbunden sind. Die radialen Abstützungen 22 werden gleitend mit der in Fig. 8b dargestellten und mit dem Turm 2 verbundenen Ringführung 19 angeordnet. Durch die radiale Abstützung 22 wird verhindert, dass sich die Bündelungsvorrichtungen 17 während einer axialen Bewegung in einer Ringführung 19 verhaken.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

| | | | |
|---|---|---|---|
| 1 | Windturbine | 24 | Befestigungsvorrichtung |
| | | 25 | Einsatz |
| 2 | Turm | 26 | Aufnahme |
| 3 | Turmwand | 27 | Bündelungsvorrichtung |
| 4 | Turmachse | 28 | Träger |
| 5 | Axialrichtung | 29 | Befestigungsvorrichtung |
| 6 | Radialrichtung | 30 | Achse |
| 7 | Umfangsrichtung | 31 | Querschnitt |
| 8 | Maschinenhaus | 33 | Führung (Spirale) |
| 9 | Rotor | | |
| 10 | Leistungskabel | D | Abstand |
| 11 | Erdungsleiter | | |
| 12 | Kabel | | |
| 13 | Signal- und Steuerkabel | | |
| 14 | Kabelbündel | | |
| 15 | Ende | | |
| 16 | Unteren Bereich | | |
| 17 | Bündelungsvorrichtung | | |
| 18 | Träger | | |
| 19 | Ringführung | | |
| 20 | Klemmspange | | |
| 21 | Bohrung | | |
| 22 | Abstützung | | |
| 23 | Schrauben | | |

## Patentansprüche

1. Turm (2) für eine Windturbine (1) umfassend,
- ein oberes Ende, woran ein Maschinenhaus (8) drehbar anordenbar ist,
- wobei mindestens drei Kabel (10, 11, 12) in dem Turm (2) längs angeordnet sind und ein Kabelbündel (14) mit einer Längachse bilden,
- und ein oberes Ende (15) des Kabelbündels (14) drehfest mit dem Maschinenhaus (8) verbindbar ist,
- und ein unterer Bereich (16) des Kabelbündels (14) drehfest mit dem Turm (2) verbunden ist,
- mindestens zwei Bündelungsvorrichtungen (17, 27), umfassend Befestigungsvorrichtungen (24, 29) zur Befestigung der Bündelungsvorrichtung (17, 27) an den Kabeln (10, 11, 12, 13), vorgesehen sind,
- wobei die Bündelungsvorrichtungen (17, 27) zwischen dem oberen Ende (15) und dem unteren Bereich (16) an den Kabeln (10, 11, 12, 13) derart angeordnet sind,
- und die Bündelungsvorrichtungen (17, 27) derart ausgebildet sind,
- so dass mindestens drei Kabel (10, 11, 12) im Kabelbündel (14) einen Mindestabstand (D) zu einander aufweisen,
**dadurch gekennzeichnet, dass**
- die Bündelungsvorrichtung (17, 27) einen Träger (18, 28) und Befestigungsvorrichtungen (24, 29) umfasst und die Befestigungsvorrichtungen (24, 29) drehbar an dem Träger (18) angeordnet sind, so dass eine Schrägstellung der Kabel (10, 11, 12) bezüglich der Längsachse des Kabelbündels (14) mittels der Befestigungsvorrichtung (29) nachführbar ist.

2. Turm (2) nach Anspruch 1, **dadurch gekennzeichnet, dass** die Anzahl der Befestigungsvorrichtungen (24, 29) mindestens die Anzahl der Kabel (10, 11, 12) entspricht.

3. Turm (2) nach Anspruch 1 oder 2, **dadurch gekennzeichnet, dass** der Träger (18) zumindest teilweise durch die Befestigungsvorrichtungen (24, 29) gebildet ist bzw. die Befestigungsvorrichtungen (24, 29) zumindest teilweise durch den Träger (18) gebildet sind.

4. Turm (2) nach Anspruch 3, **dadurch gekennzeichnet, dass** die Befestigungsvorrichtungen (29) alleine eine Aufnahme (26) für die Kabel bilden und die Aufnahme (26) einen im Wesentlichen dreieckigen Querschnitt aufweist.

5. Turm (2) nach einem oder mehreren der voran gestellten Ansprüche, **dadurch gekennzeichnet, dass** die Bündelungsvorrichtung (17, 27) mindestens drei Befestigungsvorrichtungen (24, 29), vorzugsweise sechs Befestigungsvorrichtungen (24, 29) und besonders vorzugsweise acht Befestigungsvorrichtungen (24, 29) umfasst.

6. Turm (2) nach einem oder mehreren der voran gestellten Ansprüche, **dadurch gekennzeichnet, dass** mindestens eine Befestigungsvorrichtung (24, 29) einen Einsatz (25) umfasst, wobei die Aufnahme (26) durch den Einsatz (25) hinsichtlich des Querschnitts verringert ist.

7. Turm (2) nach einem oder mehreren der voran gestellten Ansprüche, **dadurch gekennzeichnet, dass** in dem Turm (2) Ringführungen (19) angeordnet sind, wodurch die radiale Bewegungsmöglichkeit des Kabelbündels (14) begrenzt ist.

8. Turm (2) nach einem oder mehreren der voran gestellten Ansprüche, **dadurch gekennzeichnet, dass** die Bündelungsvorrichtungen (17, 27) einen Abstand zu einander aufweisen, wobei der Abstand so gewählt wird dass eine freie Verwindung der Kabel (10, 11, 12, 13) zugegeben ist, die Kabel (10, 11, 12, 13) sich jedoch nie so stark verwinden können dass sie in Kontakt miteinander kommen.

9. Turm (2) nach Anspruch 8, **dadurch gekennzeichnet, dass** die Bündelungsvorrichtungen (17, 27) in einem Abstand von 500-600 mm zu einander angeordnet sind.

10. Turm (2) nach Anspruch 7, **dadurch gekennzeichnet, dass** eine oder mehrere der Bündelungsvorrichtungen (17, 27) eine radiale Abstützung (22) umfasst, wobei die Abstützung (22) gleitend in der Ringführung (19) anordenbar ist.

11. Turm (2) nach Anspruch 9, **dadurch gekennzeichnet, dass** die radiale Abstützung (22) U-förmig ausgebildet und mit zwei Bündelungsvorrichtungen (17, 27) verbunden ist.

12. Turm (2) nach Anspruch 10, **dadurch gekennzeichnet, dass** eine Versteifung die mit der Abstützung (22) verbundenen Bündelungsvorrichtungen (17, 27) verbindet, wobei die Versteifung eine Verbiegung der Abstützung (22) bei Verwindung des Kabelbündels (14) verhindert.

## Claims

1. Tower (2) of a wind turbine (1) comprising,
- an upper end, whereof a nacelle (8) is rotatably arrangeable,
- whereas at least three cable (10, 11, 12) are longitudinally arranged in the tower (2) and form a cable bundle (14) with a longitudinal axis,
- and an upper end (15) of the cable bundle (14) is rotatably fixed with the nacelle (8),
- and a lower part (16) of the cable bundle (14) is rotably fixed with the tower (2),
- at least two bundling devices (17, 27), comprising fixing devices (24, 29) for fixing of the bundling devices (17, 27) onto the cable (10, 11, 12, 13), are provided for,
- whereas the bundling devices (17, 27) between the upper end (15) and the lower part (16) on the cables (10, 11, 12 , 13) is designed in such a manner,
- and the bundling devices (17, 27) are designed in such a manner,
- so that at least three cables (10, 11, 12) in the cable bundle (14) feature a minimum clearance (D) to each other,
**characterized in that**
- the bundling device (17, 27) comprises a support (18) and fixing devices (29) and the fixing devices (29) are rotatably arranged on the support (18), so that an inclination of the cable (10, 11, 12) respective to the longitudinal axis of the cable bundles (14) is retraced by means of the fixing device (29).

2. Tower (2) according to claim 1, **characterized in that** the number of the fixing devices (24, 29) correlates at least with the number of the cable (10, 11, 12).

3. Tower (2) according to claim 1 or 2, **characterized in that** the support (18) at least partly consists of the fixing devices (24, 29) or rather the fixing devices (24, 29) at least partly consist of the support (18).

4. Tower (2) according the claim 3, **characterized in that** the fixing devices (29) form a receptor (26) for the cable and the receptor (26) comprises a mainly triangular cross section.

5. Tower (2) according to one of the preceding claims, **characterized in that** the bundling device (17, 27) comprises at least three fixing devices (24, 29), preferably six fixing devices (24, 29) and particularly preferably eight fixing devices (24, 29).

6. Tower (2) according to one of the preceding claims, **characterized in that** at least one fixing device (24, 29) comprises an insertion (25), whereas the receptor (26) with regard to the cross section is reduced by the insertion (25).

7. Tower (2) according to one of the preceding claims, **characterized in that** ring conducts (19) are arranged in the tower (2) whereby the radial movement possibilities of the cable bundle (14) are restricted.

8. Tower (2) according to one of the preceding claims, **characterized in that** the bundling devices (17, 27) feature a clearance to each other, whereas the clearance is elected in a way that a free twisting of the cable (10, 11, 12, 13) is admitted, yet the cable (10, 11, 12, 13) cannot be twisted in such way that they get in contact with each other.

9. Tower (2) according to claim 8, **characterized in that** the bundling devices (17, 27) are arranged at a clearance of 500-600 mm to each other.

10. Tower (2) according to claim 7, **characterized in that** one or more of the bundling devices (17, 27) comprise a radial support (22), whereas the support (22) is slidingly arranged in the ring conduct (19).

11. Tower (2) according to claim 9, **characterized in that** the radial support (22) is designed in a U-shape and connected with two bundling devices (17, 27).

12. Tower (2) according to claim 10, **characterized in that** a reinforcement connects the bundling devices (17, 27) connected with the support (22), whereas the reinforcement prevents a deflection of the support (22) at twisting of the cable bundle (14).

## Revendications

1. Tour (2) d'une éolienne (1) comprenant,
- une extrémité supérieure, dont une nacelle (8) est réglable on rotation,
- tandis qu'au moins trois câbles (10, 11, 12) sont disposés longitudinalement dans la tour (2) et forment un faisceau de câbles (14) avec un axe longitudinal,
- et une extrémité supérieure (15) du faisceau de câbles (14) est fixé de manière rotative avec la nacelle (8),
- et une partie inférieure (16) du faisceau de câbles (14) est fixé de manière rotative à la tour (2),
- au moins deux dispositifs de mise en liasse (17, 27), comportant des dispositifs de fixation (24, 29) pour la fixation des dispositifs de mise en liasse (17, 27) sur le câble (10, 11, 12, 13), sont prévus pour,
- que les dispositifs de mise en liasse (17, 27) entre l'extrémité supérieure (15) et la partie inférieure (16) sur les câbles (10, 11, 12, 13) est conçu de telle manière,
- et les dispositifs de regroupement du mise en liasse (17, 27) sont conçus de telle manière,
- qu'au moins trois câbles (10, 11, 12) dans le faisceau de câbles (14) comportent un jeu minimal (D) entre eux,
**caractérisé en ce que**
- le dispositif de mise en liasse (17, 27) comprenne un support (18) et des dispositifs de fixation (29) et les dispositifs de fixation (29) sont disposés de manière rotative sur le support (18), de telle sorte qu'une inclinaison du câble (10, 11, 12) par rapport à l'axe longitudinal des faisceaux de câbles (14) soit retracée au moyen du dispositif de fixation (29).

2. Tour (2) selon la revendication 1, **caractérisée en ce que** le nombre des dispositifs de fixation (24, 29) soit le même que le nombre de câbles (10, 11, 12).

3. Tour (2) selon la revendication 1 ou 2, **caractérisée en ce que** le support (18) soit formé au moins partiellement des dispositifs de fixation (24, 29) ou au mieux que les dispositifs de fixation (24, 29) soient constitué au moins partiellement par le support (18) lui-même.

4. Tour (2) selon la revendication 3, **caractérisée en ce que** les dispositifs de fixation (29) forment un récepteur (26) pour le câble et le récepteur (26) comprend une section transversale essentiellement triangulaire.

5. Tour (2) selon l'une des revendications précédentes, **caractérisée en ce que** le dispositif de mise en liasse (17, 27) comprend au moins trois dispositifs de fixation (24, 29), de préférence six dispositifs de fixation (24, 29) et au mieux huit dispositifs de fixation (24, 29).

6. Tour (2) selon l'une des revendications précédentes, **caractérisé en ce qu'**au moins un dispositif de fixation (24, 29) comprenne une insertion (25), tandis que le récepteur (26) par rapport à la section transversale est réduite par l'insertion (25).

7. Tour (2) selon l'une des revendications précédentes, **caractérisée en ce que** les goulottes (19) soient disposées dans la tour (2) de sorte que les possibilités de déplacement radial du faisceau de câbles (14) sont restreintes.

8. Tour (2) selon l'une des revendications précédentes, **caractérisée en ce que** les dispositifs de mise en liasse (17, 27) comportent un jeu admissible entre eux, qui est choisi pour permettre une torsion libre du câble (10, 11, 12, 13), mais qui en revanche ne permet pas aux câbles (10, 11, 12, 13) d'être tordus de telle façon que les câbles entrent en contact les uns avec les autres.

9. Tour (2) selon la revendication 8, **caractérisée en ce que** les dispositifs de mise en liasse (17, 27) sont disposés à un jeu de 500 à 600 mm les uns des autres.

10. Tour (2) selon la revendication 7, **caractérisée en ce qu'**une ou plusieurs des dispositifs de mise en liasse (17, 27) comprennent un support radial (22), tandis que le support (22) est disposée de manière coulissant dans la goulotte (19).

11. Tour (2) selon la revendication 9, **caractérisée en ce que** le support radial (22) soit réalisé en forme de U et relié à deux dispositifs de misse en liasse (17, 27).

12. Tour (2) selon la revendication 10, **caractérisée en ce qu'**une armature de renforcement relie les dispositifs de groupage (17, 27) reliée au support (22), tandis que l'armature de renforcement empêche un fléchissement du support (22) à la torsion du faisceau de câble (14).
